# FASCICULE DE BREVET EUROPEEN

(11) **EP 2 097 965 B1**
(45) Date de publication et mention de la délivrance du brevet: **25.05.2016**
(21) Numéro de dépôt: 07871927.5
(22) Date de dépôt: 13.12.2007
(51) Int. Cl.: F16C 35/00, F16C 32/04, H02K 5/08, H02K 9/197, H02K 5/128

(54) **MACHINE ÉLECTRIQUE CHEMISÉE OU SURMOULÉE**
UMSPRITZTE ODER ABGEDICHTETE ELEKTROMASCHINE
OVERMOULDED OR CANNED ELECTRICAL MACHINE

(30) Priorité: 14.12.2006 FR 0655515
(43) Date de publication de la demande: 09.09.2009
(73) Titulaire: SKF MAGNETIC MECHATRONICS, 27950 Saint-Marcel (FR)
(72) Inventeur: BAUDELOCQUE, Luc, 27200 Vernon (FR); BRUNET, Maurice, 27950 Sainte Colombe Près Vernon (FR)
(74) Mandataire: Desormiere, Pierre-Louis
(86) Numéro de dépôt international: PCT/FR2007/052497
(87) Numéro de publication internationale: WO 2008/084157

(56) Documents cités:
- EP-A1- 0 311 122
- JP-A- 56 074 051
- JP-A- 2006 067 729
- US-A- 5 015 159
- US-A- 5 770 910
- US-A1- 2003 057 797

## Description

La présente invention a pour objet une machine électrique tournante comprenant au moins un équipement électrique constitué par un moteur électrique surmoulé ou un système de suspension magnétique surmoulé, ledit équipement électrique comprenant d'une part un rotor et d'autre part un stator comprenant des pièces polaires et des bobinages entourant ces pièces polaires, le stator étant équipé d'au moins un enrobage de protection contre un environnement agressif, tel qu'un gaz à haute densité et haute corrosivité pouvant pénétrer dans l'entrefer ménagé entre le rotor et le stator.

De façon plus particulière, on connaît déjà un dispositif de suspension magnétique d'un rotor par rapport à un bâti, comprenant au moins un palier magnétique actif avec au moins une bobine statorique d'électro-aimant reliée par des fils de liaison à des circuits d'asservissement de la position du rotor sur une position d'équilibre, et des moyens de contrôle de la température de la bobine statorique d'électro-aimant, le dispositif étant protégé de l'environnement par une chemise ou un surmoulage.

Une telle disposition présente l'inconvénient, dans un montage classique, de réduire les entrefers entre le stator et le rotor et de créer un effet d'étanchéité de gaz préjudiciable à la circulation du fluide de refroidissement (le gaz à haute densité) dans l'entrefer et favorisant la création de raideurs et d'amortissement directs et (effet de paliers fluides) croisés préjudiciables à la stabilité de la suspension et favorisant l'apparition de fréquences sub-synchrones communément observées sur les turbomachines, ainsi que les effets de masse ajoutée.

Ces phénomènes de raideurs et d'amortissement croisés sont similaires aux phénomènes rencontrés dans les labyrinthes des turbomachines et leurs effets néfastes sont bien connus de tous les fabricants de compresseurs.

Dans l'art antérieur, la protection envers un environnement agressif d'un palier magnétique ou d'un moteur électrique par un chemisage ou par un enrobage se présente sous forme de cylindre régulier. L'entrefer entre ce cylindre et le rotor est de l'ordre de 0,5 mm à 1 mm pour un palier magnétique, de 1 à 10 mm pour un moteur.

La longueur totale de ce cylindre peut aller de quelques centimètres à quelques décimètres. Les effets déstabilisants du gaz sont d'autant plus importants que le gaz est dense (à haute pression), que l'entrefer est petit et que la longueur est importante.

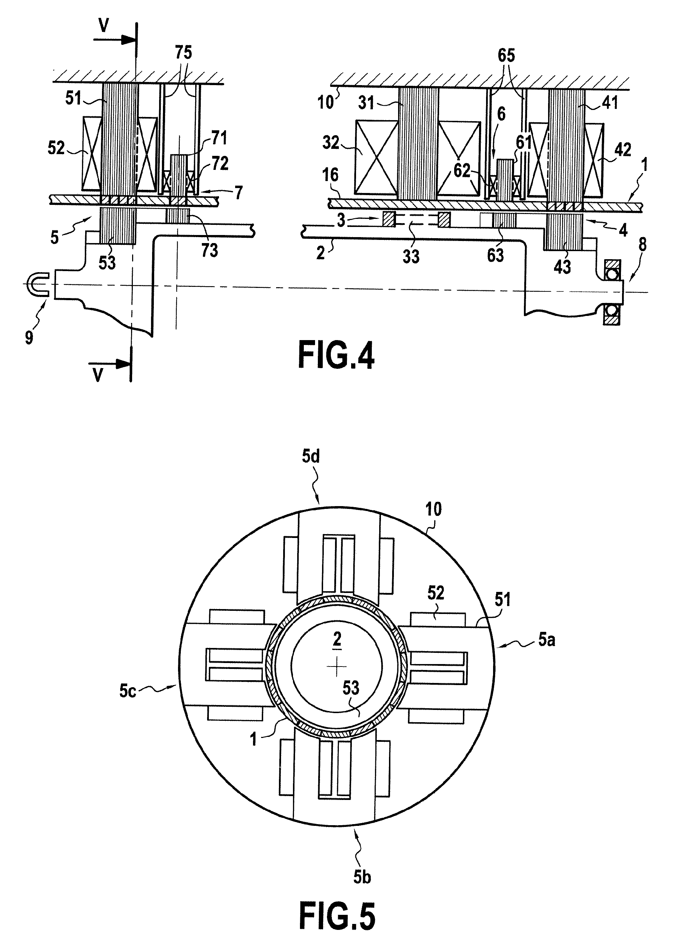

On a représenté sur les Figures 4 et 5 un exemple de dispositif de suspension magnétique d'un rotor placé dans une enceinte étanche selon l'art antérieur, tel que celui qui est décrit dans le document de brevet EP 0 097 590A1.

La Figure 4 montre ainsi un rotor 2 disposé à l'intérieur d'une enceinte étanche 1 et supporté sans contact à l'aide de paliers magnétiques 4, 5 dont les stators sont montés sur un bâti 10.

Un moteur électrique 3 pour l'entraînement du rotor 2 comporte un induit 33 monté sur le rotor 2 et un inducteur ou stator solidaire du bâti 10 et comprenant un noyau 31 et des bobines d'excitation 32.

L'enceinte étanche 1 est interposée entre l'induit 33 et le noyau 31 qui est constitué d'un empilement de tôles dont les extrémités définissant des pôles sont en contact avec la paroi 16 de l'enceinte 1 tandis qu'un espace libre est ménagé entre l'induit 33 et la paroi 16.

Les paliers magnétiques 4, 5 comprennent chacun une armature annulaire 43, 53 en matériau magnétique feuilleté montée sur le rotor 2 et un stator 41, 51 fixé au bâti 10. Le stator 41, 51 est constitué d'électroaimants 5a, 5b, 5c, 5d régulièrement répartis autour de la position théorique de l'axe de l'arbre 2 et comportant une culasse 41, 51 associée à des bobines 42, 52, chaque culasse 41, 51 définissant des pièces polaires qui se terminent au voisinage immédiat de l'enceinte étanche et viennent en regard de l'armature annulaire correspondante 43, 53, un entrefer étant ménagé entre l'enceinte 1 et cette armature 43, 53.

Les détecteurs 6, 7 de la position radiale du rotor 2 sont associés aux paliers magnétiques 4, 5 et à des circuits d'asservissement, non représentés, pour stabiliser la position du rotor 2 qui est supporté exclusivement par des moyens électromagnétiques, le palier à billes 8 n'étant présent qu'en tant que palier de secours et présentant un jeu transversal légèrement inférieur au plus petit jeu existant entre le rotor 2 d'une part et les stators de paliers magnétiques 4, 5, du moteur 3 et des détecteurs radiaux 6, 7, d'autre part.

Les détecteurs de position 6, 7 peuvent être par exemple du type électromagnétique avec une armature annulaire 63, 73 disposée sur le rotor 2 et un stator composé d'une culasse 61, 71 et d'enroulements 62, 72, le stator étant rendu solidaire du bâti 10 par exemple par des éléments de liaison 65, 75. L'enceinte étanche est disposée entre le stator de chaque détecteur et l'armature annulaire correspondante 63, 73. La Figure 4 montre également un détecteur axial 9.

On connait encore par le document US-A-5015159 une pompe à carburant comprenant un moteur électrique surmoulé ayant un rotor et un stator comprenant lui-même des pièces polaires et des bobinages. Le stator est équipé d'un enrobage de protection sur sa face située en regard du rotor. Des parties en retrait par rapport aux surfaces principales délimitant un entrefer sont formées dans l'enveloppe de protection.

La présente invention vise à remédier aux inconvénients mentionnés plus haut et à permettre d'assurer une véritable circulation du gaz le long et à l'intérieur des cylindres définissant un entrefer entre rotor et stator afin de diminuer notablement les effets instables dus au gaz.

L'invention vise ainsi à permettre d'assurer la protection d'une machine électrique comprenant un rotor et un stator, telle qu'un moteur électrique ou un système de suspension magnétique à bobinages, contre l'agressivité de l'environnement par un surmoulage du stator ou un chemisage de celui-ci à l'aide d'une chemise de nature quelconque, magnétique ou non, conductrice ou non, d'une façon telle que l'on évite les conséquences déstabilisantes des montages classiques.

D'une manière générale, la présente invention vise à permettre de s'affranchir des effets déstabilisants très importants et parfois rédhibitoires pour des machines électriques tournantes travaillant dans des fluides de haute densité et haute corrosivité, provenant des faibles entrefers entre stator et rotor, des hautes pressions des fluides et des grandes vitesses de rotation des rotors.

Les buts de l'invention sont obtenus grâce à une machine électrique telle que définie dans les revendications annexées.

Ces buts sont atteints, conformément à l'invention, grâce à une machine électrique tournante, comprenant au moins un équipement électrique constitué par un moteur électrique surmoulé ou un système de suspension magnétique surmoulé, ledit équipement électrique comprenant d'une part un rotor et d'autre part un stator comprenant des pièces polaires et des bobinages entourant ces pièces polaires, le stator étant équipé d'au moins un enrobage de protection contre un environnement agressif, sur sa face située en regard du rotor et qui délimite un entrefer situé entre le stator et le rotor, caractérisée en ce que l'enrobage de protection rapporté sur la face du stator placée en regard du rotor présente des parties en retrait par rapport aux surfaces d'extrémité délimitant l'entrefer e, ces parties en retrait étant réparties sur le pourtour du stator.

Le fait de former, dans l'enrobage de protection rapporté sur la face du stator placée en regard du rotor, des parties en retrait par rapport aux surfaces principales délimitant l'entrefer, présente notamment les avantages suivants : - les parties en retrait permettent un plus large passage pour le fluide de refroidissement et apportent donc une amélioration significative des conditions thermiques, - les parties en retrait permettent d'empêcher le gaz de former un film tournant à une vitesse inférieure ou égale à la vitesse de rotation du rotor, souvent objet d'un phénomène d'excitation sub-synchrone communément observé dans les turbomachines au niveau des étanchéités gaz, - les parties en retrait permettent l'augmentation du volume entourant le rotor et donc facilitent le mouvement du gaz autour du rotor lorsque le rotor se déplace radialement et diminue ainsi de manière significative les raideurs et amortissements directs et croisés dus aux effets gaz, ainsi que les effets de masse ajoutée.

Selon un premier mode de réalisation, les parties en retrait sont formées à l'aide d'un surmoulage qui enrobe l'ensemble des bobinages du stator tout en ne remplissant que partiellement des espaces ménagés entre les pièces polaires du stator de sorte que la surface libre du surmoulage définissant les parties en retrait forme des décrochements par rapport aux surfaces d'extrémité des pièces polaires.

Selon un deuxième mode de réalisation conforme à l'invention, la machine électrique comprend un surmoulage qui enrobe l'ensemble des bobinages du stator et est réalisé jusqu'au niveau des surfaces d'extrémité des pièces polaires, mais des rainures sont formées dans le surmoulage entre certaines au moins desdites pièces polaires de manière à former les parties en retrait.

Conformément à l'invention, la machine électrique comprend une chemise définissant des parties crénelées qui se projettent dans les encoches définies entre certaines au moins des pièces polaires de manière à former les parties en retrait , mentionnées plus haut.

Conformément à l'invention la machine électrique comprend un surmoulage comprenant des rainures, les parties crénelées de la chemise peuvent être disposées dans les rainures formées dans le surmoulage.

Conformément à l'invention la chemise est réalisée en matériau électriquement conducteur et les parties crénelées de la chemise sont disposées dans des zones correspondant à une encoche sur deux parmi les encoches formées entre les pièces polaires.

Selon un autre mode de réalisation non couvert par l'invention le stator comprend au moins deux secteurs indépendants surmoulés et chemisés de manière indépendante et lesdites parties en retrait sont formées par des espaces libres ménagés entre les secteurs indépendants.

La machine électrique peut comprendre au moins deux secteurs indépendants.

Toutefois, de préférence, elle peut comprendre quatre ou huit secteurs indépendants définissant entre eux des espaces libres constituant lesdites parties en retrait.

La machine électrique tournante peut comprendre un équipement électrique constitué par un palier magnétique radial ou, dans le cas des trois premiers modes de réalisation, également constitué par un moteur électrique.

D'autres caractéristiques et avantages de l'invention ressortiront de la description suivante de modes particuliers de réalisation, donnés à titre d'exemples en référence aux dessins annexés, sur lesquels :
- la Figure 1 est une vue en coupe selon un plan perpendiculaire à l'axe d'une machine électrique selon un premier mode de réalisation non couvert par l'invention, dans lequel le stator de la machine est muni d'un surmoulage,
- la Figure 2 est une vue en coupe selon un plan perpendiculaire à l'axe d'une machine électrique selon un deuxième mode de réalisation conforme à l'invention, dans lequel le stator de la machine est muni à la fois d'un surmoulage et d'un chemisage,
- la Figure 3 est une vue en coupe selon un plan perpendiculaire à l'axe d'un palier magnétique radial selon encore un autre mode de réalisation non couvert par l'invention l'invention, dans lequel le stator comprend quatre quadrants indépendants,
- la Figure 4 est une vue en demi-coupe axiale d'un exemple de suspension électromagnétique pour un rotor placé à l'intérieur d'une enceinte étanche, selon une réalisation de l'art antérieur, et
- la Figure 5 est une vue en coupe selon la ligne V-V de la Figure 4 montrant la structure d'un palier magnétique radial de l'art antérieur.

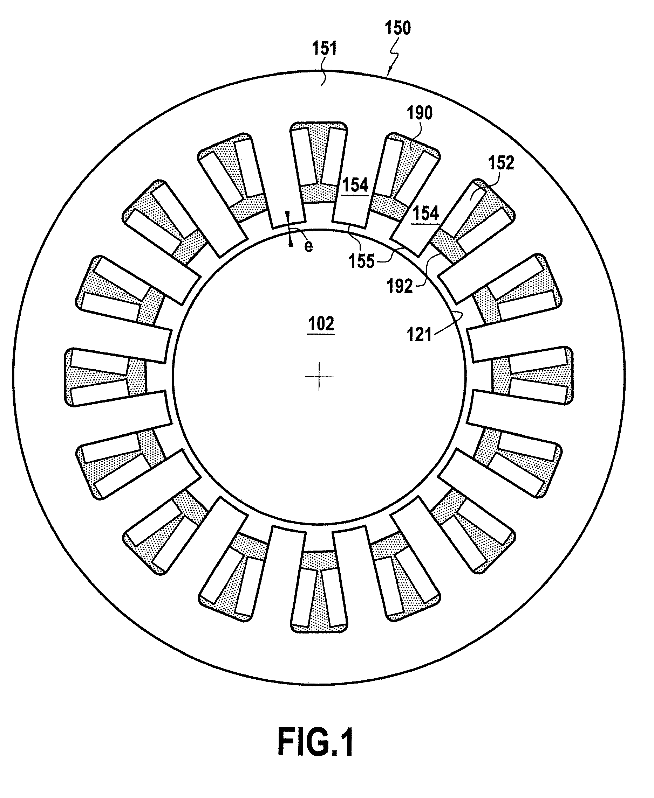

La Figure 1 montre une vue d'un équipement électrique de machine tournante qui peut être un palier magnétique radial ou un moteur électrique et comprend d'une part un rotor 102 équipé d'une armature 121 et d'autre part un stator 150.

Le stator 150 comprend une culasse 151 en matériau magnétique feuilleté qui présente des pièces polaires 154 dont les extrémités 155 sont disposées à faible distance d'une armature annulaire 121 disposée à la périphérie du rotor 102. Un entrefer e est ainsi défini entre les extrémités 155 des pièces polaires 154 du stator 150 et l'armature 121 du rotor 102.

Des bobines 152 entourent les pièces polaires 154 et un enrobage 190 de protection est surmoulé sur les pièces polaires 154 et les bobines 152.

Toutefois, le surmoulage 190 qui enrobe l'ensemble des bobines 152 du stator 150 ne remplit que partiellement les espaces ménagés entre les pièces polaires 154 du stator 150, de sorte que la surface libre du surmoulage 190 forme un décrochement par rapport aux surfaces d'extrémité 155 des pièces polaires 154 et définit, entre ces pièces polaires 154, des parties en retrait 192 qui sont réparties sur le pourtour du stator 150. Ces parties en retrait 192 permettent d'améliorer la circulation du fluide de refroidissement entre l'armature 121 du rotor et la face du stator placée en regard de cette armature 121. Les conditions thermiques sont ainsi améliorées et on évite que le gaz de refroidissement forme dans l'entrefer un film tournant à une vitesse inférieure ou égale à la vitesse de rotation du rotor, ce qui en particulier réduit les phénomènes d'excitation sub-synchrone. L'augmentation du volume entourant le rotor facilite d'une manière générale le mouvement du gaz autour du rotor et diminue les raideurs et amortissements parasites apportés par les effets fluides.

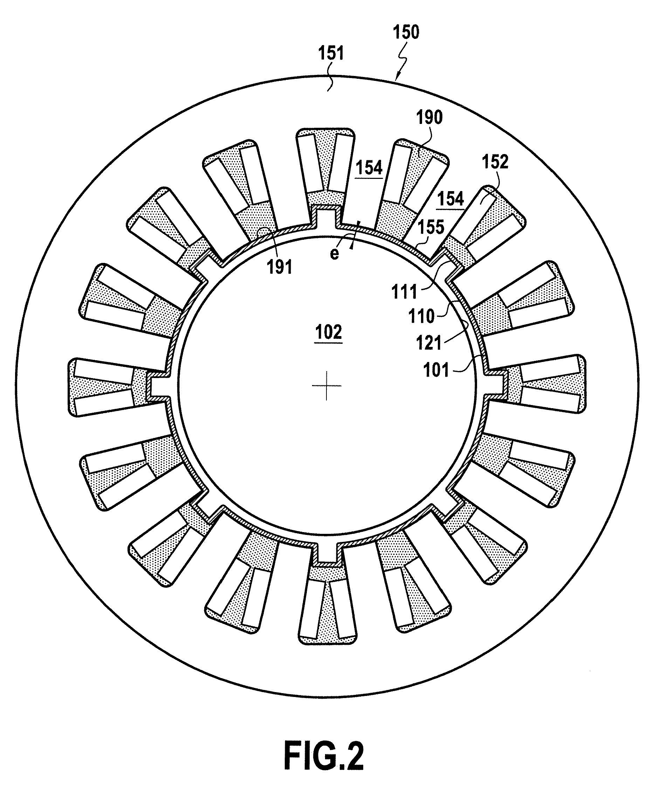

La Figure 2 montre un mode de réalisation de l'invention, dans lequel le surmoulage 190 qui enrobe l'ensemble des bobines 152 du stator 150 est réalisé jusqu'au niveau des surfaces d'extrémité 155 des pièces polaires 154. Dans ce cas, des rainures sont formées dans le surmoulage 190 entre tout ou partie des pièces polaires 154.

Dans le cas de la Figure 2, le surmoulage 190 vient affleurer au niveau des surfaces d'extrémité 155 des pièces polaires 154 dans des zones 191 correspondant à une encoche sur deux parmi les encoches formées entre les pièces polaires 154.

Dans le cas de la Figure 2, le stator du moteur électrique ou du palier magnétique comprend non seulement un enrobage surmoulé 190 de protection des bobines 152, mais également une chemise 101 hermétique destinée à protéger le stator face au fluide agressif circulant dans l'entrefer e entre le stator et l'armature 121 du rotor 102.

Dans ce cas, la chemise 101 comprend des portions de cylindre 110 qui épousent le surmoulage 190 et les surfaces terminales 155 des pièces polaires 154 et des parties crénelées 111 qui se projettent dans les encoches dans lesquelles des rainures ont été formées dans le surmoulage 190.

Les parties en retrait augmentent le volume disponible pour le fluide circulant dans l'entrefer entre l'armature 121 du rotor 102 et la chemise 101.

Le surmoulage interne 190 empêche la chemise 101 de se déformer sous l'effet de la pression. Cette précaution est nécessaire afin de ne pas engendrer de contrainte mécanique dans la chemise, car de telles contraintes mécaniques créent un effet de fatigue de la chemise qui réduit sa durée de vie vis-à-vis des cycles de pressurisation et de dépressurisation. Par ailleurs, de telles contraintes diminuent les résistances anticorrosion.

Dans tous les cas, il est important que les parties crénelées 111 de la chemise 101 en matériau électriquement conducteur (par exemple en acier inoxydable) soient formées dans une encoche sur deux parmi les encoches définies entre les pôles 154, comme représenté sur la Figure 2, de sorte que deux pôles 154 d'un même circuit magnétique sont englobés entre deux parties crénelées 111 ou dents de la chemise 101. De ce fait, on évite la formation d'une spire de court-circuit sur chacun des pôles 154 et on évite ainsi un obstacle à la variation de flux qui réduirait ou annulerait la bande passante du palier magnétique.

La chemise 101 est de préférence en un matériau conducteur magnétique afin de diminuer l'entrefer magnétique e du palier, mais ce n'est pas absolument obligatoire.

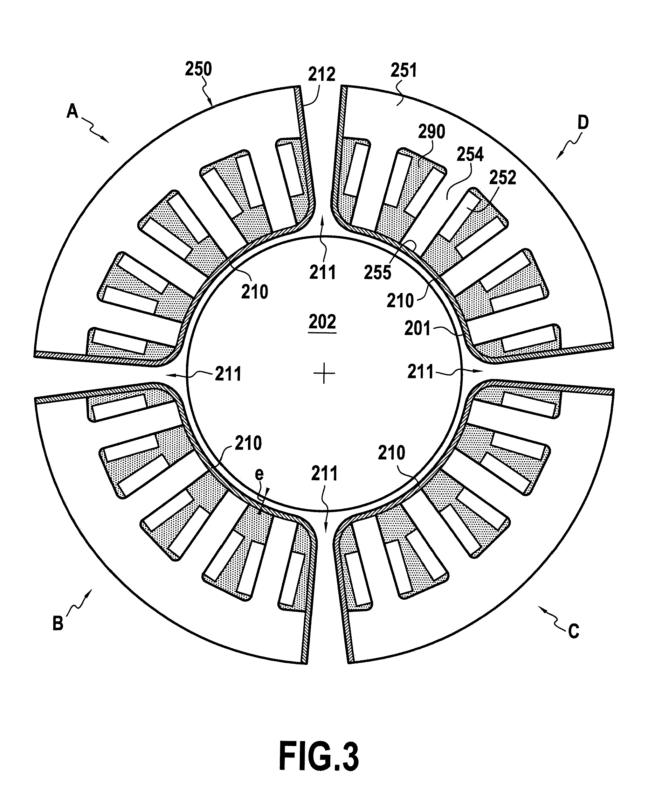

La Figure 3 montre encore un autre mode de réalisation selon lequel un palier magnétique radial comprend une pluralité de secteurs indépendants A, B, C, D qui sont chacun munis d'un surmoulage 290 et/ou d'une chemise 201 réalisée de façon indépendante pour chaque secteur A, B, C, D et comprennent entre eux des espaces libres 211 qui forment des parties en retrait permettant au fluide gazeux qui circule entre le rotor 202 et les parties 210 des chemises épousant les parties terminales 255 des pièces polaires 254, de pouvoir bénéficier d'un volume supplémentaire, comme dans le cas des modes de réalisation précédemment décrits.

Dans le mode de réalisation de la Figure 3, chaque secteur A, B, C, D du stator 250 peut être réalisé de la même manière avec une culasse 251 en matériau magnétique feuilleté définissant des pièces polaires 254 entourées de bobines d'excitation 252. Chaque secteur A, B, C, D peut être muni d'un surmoulage 290 de protection des bobines 252, qui remplit toutes les encoches entre les pièces polaires 254 et affleure au niveau des parties terminales 255 de ces pièces polaires 254.

Chaque secteur A, B, C, D peut de façon alternative comprendre une chemise 201 qui comprend une partie principale 210 protégeant des parties terminales 255 des pièces polaires 254 et obturant les encoches formées entre les pièces polaires 254, et des parties latérales 212 qui protègent l'extrémité d'un secteur A, B, C, D, en délimitant le passage précité 211 entre deux secteurs voisins qui est en communication avec l'espace de circulation de fluide défini entre les secteurs de stator A, B, C, D et le rotor 202.

Comme représenté sur la Figure 3, le même palier peut comprendre des secteurs de stator A, B, C, D comprenant à la fois un surmoulage 290 et une chemise 201. L'invention concerne ainsi un palier à secteurs indépendants pouvant être équipés chacun de façon indépendante, soit d'un surmoulage 290, soit d'une chemise 201, soit de la combinaison d'un surmoulage 290 et d'une chemise 201, les secteurs étant assemblés de manière à laisser des espaces de circulation de fluide entre les secteurs.

Le stator peut comprendre deux secteurs indépendants ménageant entre eux deux espaces libres 211. Toutefois, il est avantageux de réaliser un palier à quatre quadrants indépendants A, B, C, D, comme représenté sur la Figure 3, avec quatre espaces libres 211 ménagés entre ces quadrants. D'autres modes de réalisation avec un nombre différent de secteurs, par exemple trois ou huit secteurs, sont éqalement possibles.

D'une manière générale, les mesures préconisées dans le cadre de la présente invention permettent, tout en maintenant un entrefer e de faible valeur, par exemple de 0,5 mm à 1 mm pour un palier magnétique, ou de 1 à 10 mm pour un moteur électrique, de s'affranchir des effets déstabilisants liés aux hautes pressions et aux grandes vitesses pour des machines électriques tournantes chemisées ou surmoulées pour un fonctionnement dans un gaz à haute densité ou un autre type de fluide devant circuler dans l'entrefer.

Dans la description qui précède, l'expression "moteur électrique" couvre aussi le cas d'un tel équipement électrique fonctionnant en génératrice.

## Revendications

1. Machine électrique tournante, comprenant au moins un équipement électrique constitué par un moteur électrique surmoulé ou un système de suspension magnétique surmoulé, ledit équipement électrique comprenant d'une part un rotor (102) et d'autre part un stator (150) comprenant des pièces polaires (154) et des bobinages (152) entourant ces pièces polaires (154), le stator (150) étant équipé d'au moins un enrobage (190) de protection contre un environnement agressif, sur sa face située en regard du rotor (102) et qui délimite un entrefer (e) situé entre le stator (150) et le rotor (102), l'enrobage (190) de protection rapporté sur la face du stator (150) placée en regard du rotor (102) présentant des parties en retrait (111) par rapport aux surfaces d'extrémité (155) délimitant l'entrefer (e), ces parties en retrait (111) étant réparties sur le pourtour du stator (150),
**caractérisée**
**en ce que** la machine comprend un surmoulage (190) qui enrobe l'ensemble des bobinages (152) du stator (150) et est réalisé jusqu'au niveau des surfaces d'extrémité (155) des pièces polaires (154), mais des rainures sont formées dans le surmoulage (190) entre certaines au moins desdites pièces polaires (154) de manière à former les parties en retrait,
**en ce que** la machine comprend une chemise (101) qui définit des parties crénelées (111) qui se projettent dans les encoches définies entre certaines au moins des pièces polaires (154) de manière à former les parties en retrait,
**en ce que** les parties crénelées (111) de la chemise (101) sont disposées dans les rainures formées dans le surmoulage (190),
et **en ce que** la chemise est réalisée en matériau électriquement conducteur et les parties crénelées (111) de la chemise (101) sont disposées dans des zones (191) correspondant à une encoche sur deux parmi les encoches formées entre les pièces polaires (154).

2. Machine électrique selon la revendication 1, **caractérisée en ce que** l'équipement électrique est constitué par un palier magnétique radial.

3. Machine électrique selon la revendication 1, **caractérisée en ce que** l'équipement électrique est constitué par un moteur électrique.

## Patentansprüche

1. Drehende elektrische Maschine, die wenigstens eine elektrische Einrichtung umfasst, die durch einen überformten Elektromotor oder ein überformtes Magnetaufhängungssystem gebildet ist, wobei die elektrische Einrichtung einerseits einen Rotor (102) und andererseits einen Stator (150) umfasst, der Polstücke (154) und Wicklungen (152), die diese Polstücke (154) umgeben, aufweist, wobei der Stator (150) mit wenigstens einer Hülle (190) für den Schutz vor einer aggressiven Umgebung auf seiner Fläche, die sich gegenüber dem Rotor (102) befindet und einen Luftspalt (e) begrenzt, der sich zwischen dem Stator (150) und dem Rotor (102) befindet, versehen ist, wobei die Schutzhülle (190), die an die Fläche des Stators (150) angefügt ist, die sich gegenüber dem Rotor (102) befindet, Teile (111), die gegenüber den Stirnoberflächen (155), die den Luftspalt (e) begrenzen, zurückversetzt sind, aufweist, wobei diese zurückversetzten Teile (111) auf dem Umfang des Stators (150) verteilt sind,
**dadurch gekennzeichnet, dass** die Maschine eine Überformung (190) umfasst, die die Gesamtheit der Wicklungen (152) des Stators (150) umgibt und bis auf Höhe der Stirnoberflächen (155) der Polstücke (154) verwirklicht ist, wobei jedoch in der Überformung (190) wenigstens zwischen Bestimmten der Polstücke (154) Rillen ausgebildet sind, derart, dass die zurückversetzten Teile gebildet werden,
dass die Maschine eine Verkleidung (101) aufweist, die gerippte Teile (111) definiert, die in Kerben vorstehen, die wenigstens zwischen Bestimmten der Polstücke (154) definiert sind, derart, dass die zurückversetzten Teile gebildet werden,
dass die gerippten Teile (111) der Verkleidung (101) in den in der Überformung (190) gebildeten Rillen angeordnet sind,
und dass die Verkleidung aus einem elektrisch leitenden Material verwirklicht ist und dass die gerippten Teile (111) der Verkleidung (101) in Zonen (191) angeordnet sind, die einer von zwei Kerben der zwischen den Polstücken (154) gebildeten Kerben entsprechen.

2. Elektrische Maschine nach Anspruch 1, **dadurch gekennzeichnet, dass** die elektrische Einrichtung durch ein magnetisches Radiallager gebildet ist.

3. Elektrische Maschine nach Anspruch 1, **dadurch gekennzeichnet, dass** die elektrische Einrichtung durch einen Elektromotor gebildet ist.

## Claims

1. Rotary electrical machine, comprising at least one electrical equipment item consisting of an overmoulded electric motor or an overmoulded magnetic suspension system, said electrical equipment item comprising, on the one hand, a rotor (102) and, on the other hand, a stator (150) comprising pole pieces (154) and windings (152) surrounding these pole pieces (154), the stator (150) being equipped with at least one coating (190) for protection against an aggressive environment, on its face situated facing the rotor (102) and which delimits an air gap (e) situated between the stator (150) and the rotor (102), the protective coating (190) added on to the face of the stator (150) placed facing the rotor (102) having parts set back (111) relative to the end surfaces (155) delimiting the air gap (e), these set back parts (111) being distributed over the circumference of the stator (150),
**characterized in that** the machine comprises an overmoulding (190) which coats all of the windings (152) of the stator (150) and is produced to the level of the end surfaces (155) of the pole pieces (154), but grooves are formed in the overmoulding (190) between at least some of said pole pieces (154) so as to form the set back parts,
**in that** the machine comprises a jacket (101) which defines crenelated parts (111) which project into the notches defined between at least some of the pole pieces (154) so as to form the set back parts,
**in that** the crenelated parts (111) of the jacket (101) are arranged in the grooves formed in the overmoulding (190),
and **in that** the jacket is produced in electrically conductive material and the crenelated parts (111) of the jacket (101) are arranged in areas (191) corresponding to one notch out of two of the notches formed between the pole pieces (154).

2. Electrical machine according to Claim 1, **characterized in that** the electrical equipment item consists of a radial magnetic bearing.

3. Electrical machine according to Claim 1, **characterized in that** the electrical equipment item is constituted by an electric motor.
